# EUROPEAN PATENT APPLICATION

(11) **EP 4 086 458 A1**
(43) Date of publication of application: **09.11.2022**
(21) Application number: 21172060.2
(22) Date of filing: 04.05.2021
(51) Int. Cl.: F03D 80/00, F03D 13/20, F03D 80/80

(54) **METHOD AND PENDULUM DAMPER FOR DAMPING A WIND TURBINE TOWER DURING TRANSPORTATION AND/OR INSTALLATION OF A WIND TURBINE GENERATOR**

(71) Applicant: Engiso ApS, 6700 Esbjerg (DK)
(72) Inventor: Øllgaard, Børge, 6700 Esbjerg (DK)
(74) Representative: Patrade A/S

(57) **Abstract**

Method (100) for damping a wind turbine tower during transportation and/or installation of a wind turbine generator, the wind turbine tower (90) comprising a pendulum damper (10), the pendulum damper (10) comprising one or three arms (20) extending from one or three top pivot joints (30) to a pendulum (40), each arm (20) having two or more arm sections (22) divided by one or more arm pivot joints (50), the method (100) comprising acts of:
- transporting (200) the wind turbine tower (90); and/or
- installing(300) a wind turbine generator using the wind turbine tower (90); and
- adapting (400) the pendulum damper frequency as a function of eigenfrequency of the wind turbine tower during the act of transportation (200) and/or the act of installation (300) of a wind turbine generator.

## Description

### Field of the Invention

The present invention relates to a method for damping a wind turbine tower during transportation and/or installation of a wind turbine generator.

The present invention relates to a pendulum damper adapted for damping a wind turbine tower during different stages of transportation of a wind turbine tower and installation of a wind turbine generator.

The present invention relates to a method for re-configuring a pendulum damper to be able to damp a different wind turbine tower with different eigenfrequencies.

### Background of the Invention

Wind turbine generators and wind turbine towers are ever growing in sizes in an effort to increase the maximum power output. The wind turbine towers must be transported to the installation site which may be an offshore installation site.

During the different stages of transportation and installation, the eigenfrequency of the wind turbine tower will vary. Thus, presently different dampers must be used for damping the different eigenfrequency of the wind turbine tower as a function of stage of transportation and installation. This increases the complexity of the entire operation.

As an example, a wind turbine tower positioned at a dock may have a first eigenfrequency. The same wind turbine tower being transported on a vessel may have a second eigenfrequency. The wind turbine tower has a third eigenfrequency when the wind turbine tower is installed on an offshore installation point such as an offshore jack or offshore monopole. It is possible to dampen the wind turbine tower at these three different stages using three different dampers, however it would be much preferred if only one damper is needed.

Thus, there is a need for a damper capable of damping the wind turbine tower during the stages of transportation and installation.

There is also a need for a damper capable of being reconfigured to enable re-use of the damper with replacement of as few parts as possible, since another wind turbine tower may have different eigenfrequencies at the different stages.

### Object of the Invention

It is an object of the invention to provide a method and a damper for damping a wind turbine tower during transportation and/or installation of a wind turbine generator.

It is further an object of the invention to provide a re-configurable damper and method capable of being re-configured with replacement of as few parts as possible.

### Description of the Invention

An object of the invention is achieved by a method for damping a wind turbine tower during transportation and/or during installation of a wind turbine generator.

The wind turbine tower comprises a pendulum damper, the pendulum damper comprising one or three arms extending from one or three top pivot joints to a pendulum, each arm having two or more arm sections divided by one or more arm pivot joints. The method comprising acts of:
- transporting the wind turbine tower; and/or
- installing a wind turbine generator using the wind turbine tower; and
- changing pendulum damper frequency as a function of eigenfrequency of the wind turbine tower during the act of transportation and/or the act of installation of a wind turbine generator.

The act of transporting the wind turbine tower may include different stages such as being positioned at a dock awaiting to be moved to a vessel. Another stage may be transportation to an offshore installation site or to another dock. A stage during the act of installation may be the wind turbine tower installed on an offshore installation point awaiting the installation of a nacelle and blades.

The act of transporting may be transportation to an onshore site followed by an act of installing the wind turbine tower on a foundation or base awaiting further installation of a nacelle and blades.

The wind turbine tower will in most cases be without a nacelle during transportation and during some of the construction of the wind turbine tower.

The offshore installation point may be an offshore jack or an offshore monopole, the offshore installation point may be a floating installation point.

Thereby, the same pendulum damper can dampen the wind turbine tower during different stages of transportation and installation. This greatly simplifies the act of transportation and/or the act of installation as the damper does not need to be changed.

The skilled person would know that the easiest solution is to suspend the pendulum using one or three arms, however it is possible to suspend the pendulum by other numbers of arms.

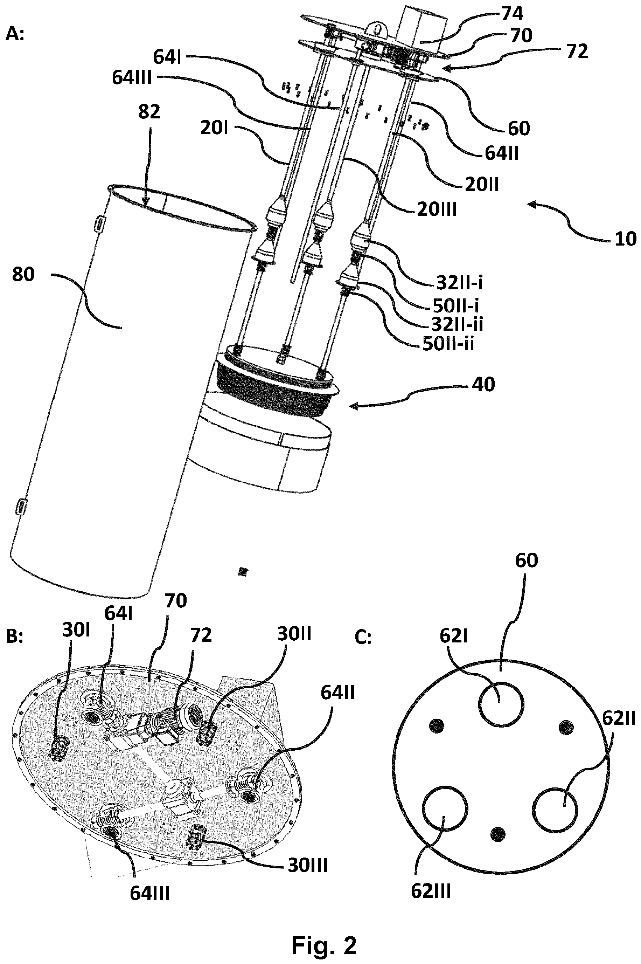

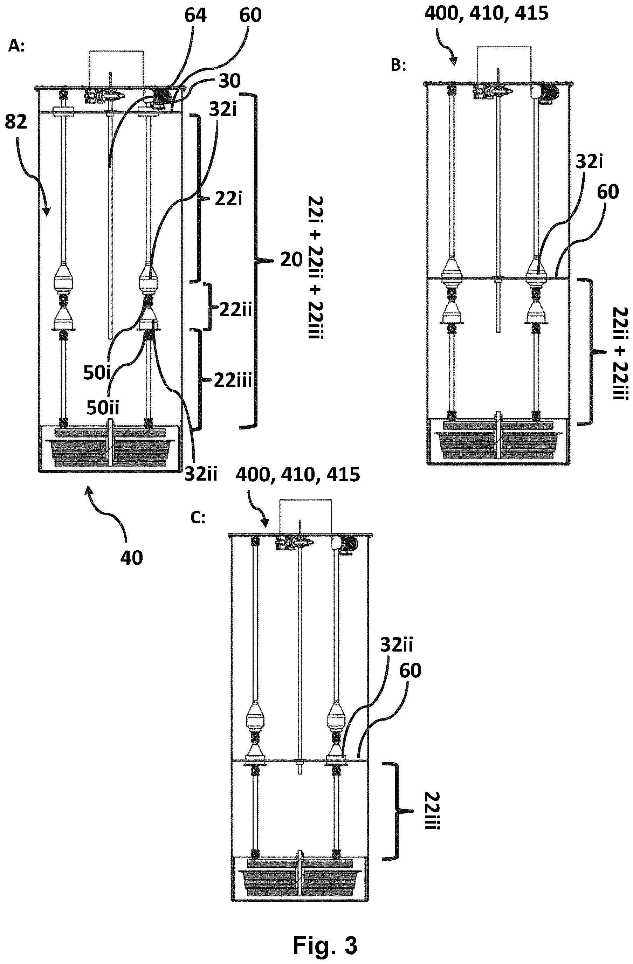

If the pendulum is suspended by three arms, then the arm sections have the same lengths and the arm pivot joints of each arm are positioned at the same distance from the top pivot joints. An example of this is shown in figures 2 and 3, where each arm has a top arm section, a middle arm section and a bottom arm section and each group of top/middle/bottom arm sections have the same length.

The eigenfrequency of the wind turbine tower during the act of transportation and/or the act of installation of a wind turbine generator are all calculated before performing the acts of transportation and installation. Thus it is possible to preconfigure or preprogram the pendulum damper by choosing arm sections and arm pivot joints enabling the damping of the known eigenfrequency at the different stages.

The top pivot joints and/or arm pivot joints may be cardan joints.

The pendulum damper may be positioned on the outer side of the wind turbine tower as it enables removal and reuse of the pendulum damper. The reuse may include the acts described in claim 15.

The pendulum damper could be further configured to damper after complete installation of the wind turbine generator. In this case the pendulum damper will be installed on the inside of the wind turbine generator.

In an aspect of the invention, the act of changing is performed by an act of restricting movement of one or more pivot joints.

The act of restricting one or more joints will in effect shorten the length of the remaining moveable part of the arm. It is well known that the frequency of a pendulum decreases with the length of the arm from which the pendulum is suspended. Thus, the shortening of the moveable part of the arm will increase the frequency. Thereby, the pendulum damper frequency can be adapted to the eigenfrequency at a given state during transportation or installation.

At the same time, the release of a pivot joint will increase the length of the moveable part of the arm thereby decreasing the frequency.

The skilled person would know that if the pendulum is suspended by three arms, then all pivot joints at said height must be restricted. As an example, in Figure 3B the three top pivot joints are prevented from moving by restricting the movement of the top arm section.

In an aspect of the invention, the act of restricting is performed by displacing a moveable fixation plate between the top pivot joint and the pendulum.

A moveable fixation plate is a simple, energy efficient and reliable way of restricting the movement of the one or more pivot joints since power is only needed during transformation of the state of the wind turbine tower.

An example of the transformation of the state of the wind turbine tower could be when the wind turbine tower is moved from a dock to a vessel. The pendulum damper may then perform the act of adapting by displacing the moveable fixation plate and thereby restricting one or more pivot joints.

In an aspect of the invention, the act of changing is performed as a function of received instructions from a decision maker.

The decision maker may be a server following and controlling the transportation and installation, or the decision maker may be a person sending instruction to the pendulum damper.

The instruction may be sent by wireless communication or by wired communication.

In an aspect of the invention, the wind turbine tower is for an offshore wind turbine generator and the pendulum damper comprises three arms sections and two arm pivot joints,
- the pendulum damper has a first damper frequency when the wind turbine tower is positioned at a dock;
- the pendulum damper has a second damper frequency during transportation of the wind turbine tower on a vessel;
- the pendulum damper has a third damper frequency when the wind turbine tower is installed on an offshore installation point, wherein the first damper frequency, the second damper frequency, and the third damper frequency are different.

The frequency will change once more when the nacelle and blades are installed, however this may take one or more weeks depending on the weather and other factors. However, the present method will allow damping at all stages up to this point using only a single pendulum damper.

In this case, the entire length of the three arm sections have a length corresponding to one of the damper frequency, the length of the two arms sections closest to the suspended pendulum is associated with another of the damper frequencies, and the length of the arm section connected to the pendulum is associated with the last damper frequency.

In an example, the first damper frequency may be 0.5 Hz and the second damper frequency may be 0.6 Hz and the third damper frequency may be 0.3 Hz. This example should be interpreted non-limiting as the values depend on the specific wind turbine tower and on the vessel and on the offshore installation point.

The offshore installation point may be an offshore jack or an offshore monopole, the offshore installation point may be a floating installation point.

An object of the invention is achieved by a wind turbine tower comprising a pendulum damper, the pendulum damper comprising one or three arms extending from one or three top pivot joints to a pendulum, each arm having two or more arm sections divided by one or more arm pivot joints and having the means for performing the acts of the method.

An object of the invention is achieved by a pendulum damper adapted for damping two or more frequencies of a tower such as a wind turbine tower.

The pendulum damper comprises
- a top plate comprising one or three top pivot joints,
- a pendulum being suspended by
   - one or three arms extending from the one or three top pivot joints to the pendulum, each arm having two or more arm sections divided by one or more arm pivot joints;
- a moveable fixation plate adapted for being displaced between the top plate and the pendulum, wherein the one or three arms extend through one or three apertures of the moveable fixation plate.

The moveable fixation plate will, when displaced between the top plate and the pendulum, restrict the movement of one or more of the pivot joints by restricting one or more arm sections. If an arm section is prevented from moving, then all pivot joints above said arm section is prevented from moving. Thus the length of the moveable part of the arm is shortened which increases the frequency.

The arm sections may be rods or may be cord or chain, however rods are preferred since the risk of creating a standing wave between the fixation plate and the top plate is considerably lower than cords or chains.

The rods may be metal rods.

In some embodiments, the pendulum damper may comprise a frame arrangement extending between the top plate and the pendulum. The moveable fixation plate may be displaceable by tracks extending along the inner side of the frame arrangement, wherein the moveable fixation plate comprises gears for engaging the tracks and at least on motor for rotation of the gear.

In some embodiments, the moveable fixation plate is connected to one or more displacement rods extending up through the top plate. The top plate comprises means for displacing the rods thereby causing displacement of the moveable fixation plate.

In an aspect of the invention, the pendulum damper further comprises one or more spindles extending from the top plate and at least one motor configured for driving the one or more spindles, the one or more spindles being coupled to the moveable fixation plate.

Spindles are energy-efficient and precise for the movement of the moveable fixation plate. Thus, the reliability is increased.

Furthermore, the motor may be coupled to the spindles thereby enabling reliable movement of the moveable fixation plate.

The spindles may be positioned as shown in the figures.

In an aspect of the invention, the pendulum damper further comprises a battery adapted for powering the motor.

The motor may be powered by a battery, which is possible as the motor only needs to be powered when the tower such as the wind turbine tower changes state, which may happen a few times such as two times or three times or four times.

The pendulum damper may further comprise a controller adapted for receiving instructions from a decision maker such as a server or a person. The controller may be powered by the battery.

In an aspect of the invention, the one or three arms above the one or more arm pivot joints may comprise a wide element complementary to the shape of the one or three apertures.

The wide element has a diameter which is greater than the diameter of the arms. Thereby the one or three apertures may have a size which prevents the arms from colliding with the moveable fixation plate since the momentum of the pendulum may damage the moveable fixation plate such as offset or tilt the moveable fixation plate.

The wide element is complementary to the shape of the aperture by being substantially equal in size thereby preventing the arm section to which the wide element is attached, and this will in effect prevent or at least limit the movement of the arm sections above the wide element.

The wide element may be positioned along the entire arm section. However, the torque is significantly lower above the arm pivot joint.

The wide element may have a cone-shaped top or spear-shaped top facing the top plate, thereby the moveable fixation plate can with greater reliability be displaced to the position of the wide element while pendulum is oscillating.

The wide element may be made of steel or iron or another metal or alloy.

In an aspect of the invention, the pendulum damper may comprise a frame arrangement supporting the top plate and surrounding at least the pendulum.

The frame arrangement enables protection of the pendulum.

The frame arrangement may be used as movement limiter to the pendulum if the pendulum is designed to collision with the frame arrangement.

The frame arrangement may have a connection point adapted for attachment with a side of a tower such as a wind turbine tower.

The frame arrangement will when forming a channel between the top plate and pendulum act as support of the moveable fixation plate by being complementary to the shape of the moveable fixation plate, such that pressure acted by wide element is distributed to a large surface area of the channel along the circumference of the moveable fixation plate.

In an aspect of the invention, the pendulum may comprise
- a side face adapted for collision with the frame arrangement; and
- a support face supporting a plurality of slideable, stacked plates extending beyond the side face.

The stacked plates are ring-shaped with a centre cavity, and the pendulum has a centre column for preventing that the stacked plates fall off the pendulum during use.

The plates may be rondelles.

Thereby, the frame arrangement can be used as a movement limiter wherein the pendulum collides with the frame arrangement as this will allow for a reduced overall weight of the system while maintaining a high damping efficiency compared to other pendulum dampers. An example for this embodiment is described in US 2019/0360471A1.

In another embodiment, the pendulum is not designed for impact with the frame arrangement and instead the pendulum damper comprise a further downwardly extending rod from the pendulum, wherein the rod is placed in a cavity formed by stacked and ring-shaped plates. This embodiment is described in higher detail in fig. 4 of WO 2009/068599 A2.

The invention is not limited to the two mentioned types of suspended dampers as other suspension dampers can be used for damping the tower.

In an aspect of the invention, frame arrangement extending from the top plate to the pendulum, thereby forming a channel, wherein the moveable fixation plate has a circumference complementary to the channel.

In an embodiment, a wind turbine tower without a nacelle installed on an offshore installation point comprises the pendulum damper as described wherein the pendulum damper has an oscillation frequency substantially equal to an eigenfrequency of the wind turbine tower.

An object of the invention is achieved by use of the pendulum damper during transportation of a wind turbine tower. The pendulum damper is adapted for damping the eigenfrequency of the wind turbine tower during different states of transportation.

An object of the invention is achieved by a method for re-configuring the pendulum damper as previously described. The method comprises the acts of
- replacing at least one of the two or more arm sections with at least one arm section having a different length than the replaced arm section; and/or
- rearranging at least two of the two or more arm sections in a different order from the top pivot joints to the pendulum.

Thereby, the pendulum damper can by simple acts be re-configuring to a new task of transportation and/or installation of a wind turbine tower having different eigenfrequencies.

### Description of the Drawing

Embodiments of the invention will be described in the figures, whereon:
- Fig. 1: illustrates a pendulum damper installed in a wind turbine tower
- Fig. 2: illustrates a first embodiment of a pendulum damper;
- Fig. 3: illustrates the first embodiment of a pendulum damper set at three different frequencies;
- Fig. 4: illustrates a second embodiment of a pendulum damper with a single arm;
- Fig. 5: illustrates the second embodiment of a pendulum damper set at three different frequencies;
- Fig. 6: illustrates a method for damping a wind turbine tower; and
- Fig. 7: illustrates a method for re-configuring the pendulum damper.

### Detailed Description of the Invention

| **Item** | **No** |
|---|---|
| Pendulum damper | 10 |
| Arm | 20 - 201, 2011, 20III |
| Arm section | 22 - 22i, 22ii, 22iii |
| Top pivot joint | 30 |
| Wide element | 32 - 32i, 32ii |
| Pendulum | 40 |
| Arm pivot joint | 50 |
| Moveable fixation plate | 60 |
| Aperture | 62 |
| Spindle | 64 - 641, 6411, 64III |
| Top plate | 70 |
| Motor | 72 |
| Controller | 74 |
| Frame arrangement | 80 |
| Channel | 82 |
| Wind turbine tower | 90 |
| Decision maker | 92 |
| Method for damping a wind turbine tower during transportation and/or installation of a wind turbine generator | 100 |
| Transporting | 200 |
| Constructing | 300 |
| Adapting | 400 |
| Restricting | 410 |
| Displacing | 415 |
| Method for re-configuring the pendulum damper | 500 |
| Replacing | 600 |
| Rearranging | 700 |

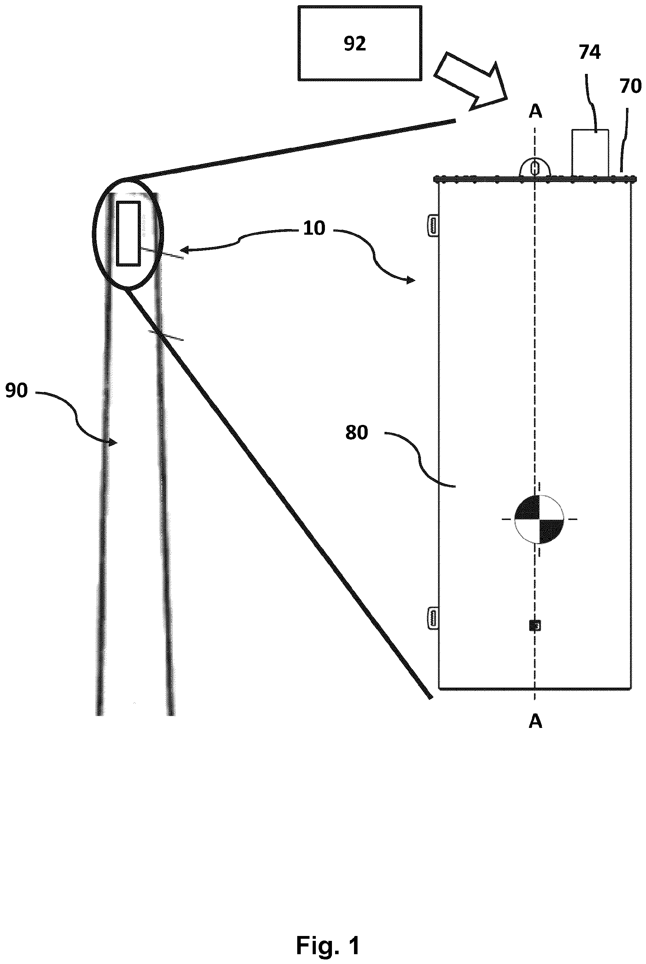

Fig. 1 illustrates a pendulum damper 10 installed in a wind turbine tower 90.

The bottom of the wind turbine tower 90 as the wind turbine tower 90 may be positioned at a dock, a vessel, an offshore installation point, or any other position. The wind turbine tower 90 will depending on the positioning have slightly different eigenfrequencies.

The offshore installation point may be an offshore jack or an offshore monopole, the offshore installation point may be a floating installation point.

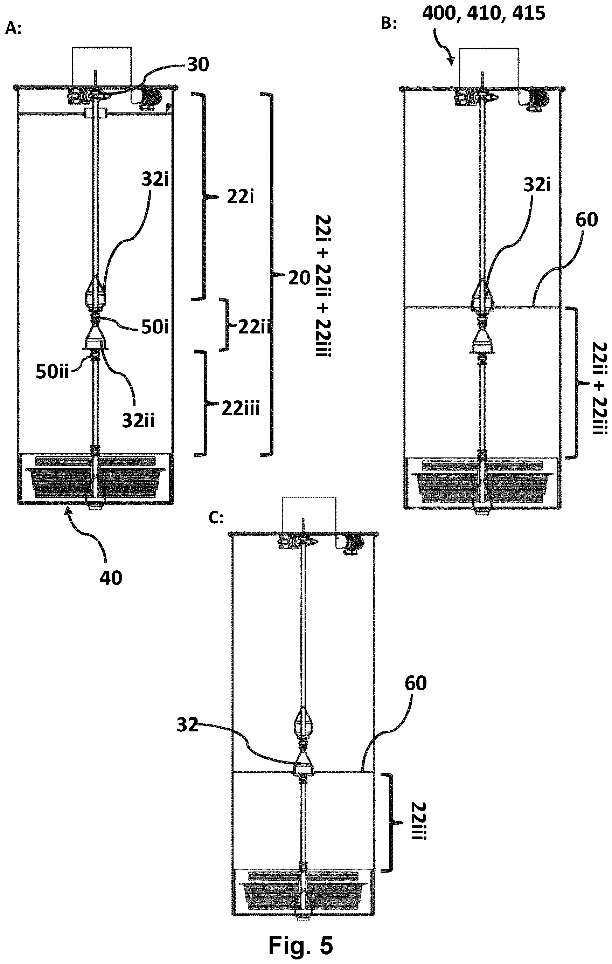

The shown pendulum damper 10 is enclosed in a frame arrangement 80. Two possible embodiments are shown figures 2-3 and figures 4-5, where figure 3 and 5 show a cross-sectional view of A-A.

The embodiment comprises a top plate 70 with a controller 74 adapted for at least receiving instructions from a decision maker 92.

The decision maker 92 may be a server or a person sending instruction to the controller.

Fig. 2 illustrates a first embodiment of a pendulum damper 10. The same pendulum damper 10 is shown in figure 3, where the pendulum damper 10 is set at different oscillation frequencies.

The shown pendulum damper 10 is adapted for damping three frequencies of a tower such as a wind turbine tower 90 at different states of the wind turbine tower 90.

The pendulum damper 10 comprises a top plate 70 comprising three top pivot joints 30 and a controller 74 for receiving instructions from a not shown decision maker. The box surrounding the controller may include a battery. The top plate 70 is shown in detail in figure 2B.

The pendulum damper 10 further comprises three spindles 64 extending from the top plate 70, the positioning of the spindles 641, 6411, 64III are shown in figure 2B and a motor 72 configured for driving the three spindles 641, 6411, 64III. The three spindles 641, 6411, 64III are coupled to a moveable fixation plate 60 for displacing the moveable fixation plate 60 along the spindles 641, 6411, 64III. The motor 72 is powered by the battery.

The pendulum damper 10 further comprises a pendulum 40 being suspended by three arms 201, 2011, 20III extending from the three top pivot joints 301, 30II, 30III to the pendulum 40. Each arm 20 has three arm sections 22 divided by two arm pivot joints 50 as this enables the pendulum damper to damp three frequencies. The arm sections 22 and arm pivot joints 50 are marked in figure 3A and numbered from the top plate 70 to the pendulum 40 as arm section 22i, 22ii, 22iii and as arm pivot joint 32i, 32ii.

The pendulum damper 10 further comprises a moveable fixation plate 60 adapted for being displaced between the top plate 70 and the pendulum 40 by rotation of the spindles 64, wherein the three arms 20 extend through three apertures 621, 6211, 62III of the moveable fixation plate 60. The schematic view of the moveable fixation plate 60 is shown in figure 2C. The blackened circles represent the apertures with threads for the spindles.

The three arms 20 above the three arm pivot joints 50 comprise a wide element 32 complementary to the shape of the three apertures 621, 6211, 62III.

The pendulum damper 10 comprises a frame arrangement 80 supporting the top plate 70 and the pendulum 40. The frame arrangement 80 extend from the top plate 70 to the pendulum 40, thereby forming a channel 82, wherein the moveable fixation plate 60 has a circumference complementary to the channel 82. This enables the frame arrangement 80 to mechanically support the moveable fixation plate 60.

Furthermore, the frame arrangement 80 can act as a movement limiter for collision with the pendulum 40. The pendulum 40 comprises a side face adapted for collision with the frame arrangement 80 and a support face supporting a plurality of slideable stacked plates extending beyond the side face.

Fig. 3 illustrates the first embodiment of a pendulum damper 10 set at three different frequencies.

In Fig 3A, the moveable fixation plate 60 is at an upper most position, thus the entire length of the arm 20 define the pendulum damper frequency of pendulum 40.

In figure 3B, an act of adapting 400 pendulum damper frequency as a function of eigenfrequency of the wind turbine tower during the act of transportation 200 and/or the act of installation 300 of a wind turbine generator 90. Here the act of adapting 400 is performed by an act of restricting 410 movement of top pivot joint 30 and thus arm section 22i, while in figure 3C arm pivot joint 50i is restricted and thus both arm section 22i and 22ii are restricted.

The act of restricting 410 is performed by displacing 415 the moveable fixation plate 60 from the top pivot joint 30 to the wide element 32i in figure 3B and wide element 32ii in figure 3C.

In figure 3B, the length of the arm sections 22ii and 22iii define the pendulum damper frequency of pendulum 40.

In figure 3C, the length of the arm section 22iii define the pendulum damper frequency of pendulum 40.

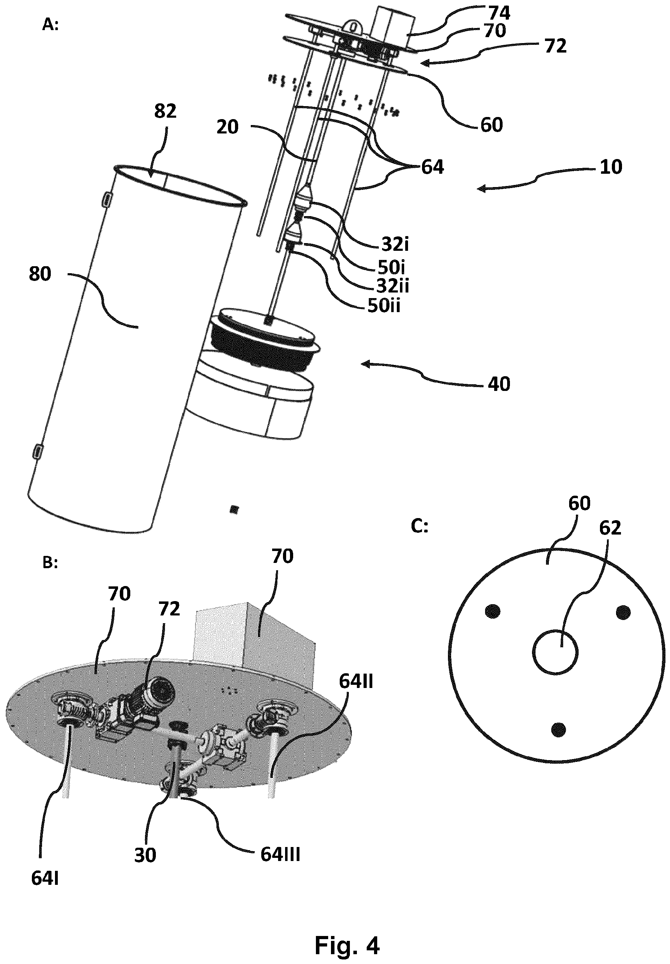

Fig. 4 illustrates a second embodiment of a pendulum damper 10 with a single arm 22.

The shown pendulum damper 10 is adapted for damping three frequencies of a tower such as a wind turbine tower 90 at different states of the wind turbine tower 90.

The pendulum damper 10 comprises a top plate 70 comprising a top pivot joint 30 and a controller 74 for receiving instructions from a not shown decision maker. The box surrounding the controller may include a battery. The top plate 70 is shown in detail in figure 5B.

The pendulum damper 10 further comprises three spindles 64 extending from the top plate 70, the positioning of the spindles 641, 6411, 64III are shown in figure 2B and a motor 72 configured for driving the three spindles 641, 6411, 64III. The three spindles 641, 6411, 64III are coupled to a moveable fixation plate 60 for displacing the moveable fixation plate 60 along the spindles 641, 6411, 64III. The motor 72 is powered by the battery.

The pendulum damper 10 further comprises a pendulum 40 being suspended by an arm 20 extending from the top pivot joint 30 to the pendulum 40. The arm 20 has three arm sections 22 divided by two arm pivot joints 50 as this enables the pendulum damper 10 to damp three frequencies. The arm sections 22 and arm pivot joints 50 are marked in figure 5A and numbered from the top plate 70 to the pendulum 40 as arm section 22i, 22ii, 22iii and as arm pivot joint 32i, 32ii.

The pendulum damper 10 further comprises a moveable fixation plate 60 adapted for being displaced between the top plate 70 and the pendulum 40 by rotation of the spindles 64, wherein the arm 20 extend through an aperture of the moveable fixation plate 60. The schematic view of the moveable fixation plate 60 is shown in figure 4C. The blackened circles represent the apertures with threads for the spindles.

The arm 20 above the arm pivot joints 50 comprise a wide element 32 complementary to the shape of the aperture 62.

The pendulum damper 10 comprises a frame arrangement 80 supporting the top plate 70 and the pendulum 40. The frame arrangement 80 extend from the top plate 70 to the pendulum 40, thereby forming a channel 82, wherein the moveable fixation plate 60 has a circumference complementary to the channel 82. This enables the frame arrangement 80 to mechanically support the moveable fixation plate 60.

Furthermore, the frame arrangement 80 can act as a movement limiter for collision with the pendulum 40. The pendulum 40 comprises a side face adapted for collision with the frame arrangement 80 and a support face supporting a plurality of slideable stacked plates extending beyond the side face.

Fig. 5 illustrates the second embodiment of a pendulum damper 10 set at three different frequencies.

In Fig 5A, the moveable fixation plate 60 is at an upper most position, thus the entire length of the arm 20 define the pendulum damper frequency of pendulum 40.

In figure 5B, an act of adapting 400 pendulum damper frequency as a function of eigenfrequency of the wind turbine tower during the act of transportation 200 and/or the act of installation 300 of a wind turbine generator 90. Here the act of adapting 400 is performed by an act of restricting 410 movement of top pivot joint 30 and thus arm section 22i, while in figure 5C arm pivot joint 50i is restricted and thus both arm section 22i and 22ii are restricted.

The act of restricting 410 is performed by displacing 415 the moveable fixation plate 60 from the top pivot joint 30 to the wide element 32i in figure 5B and wide element 32ii in figure 5C.

In figure 5B, the length of the arm sections 22ii and 22iii define the pendulum damper frequency of pendulum 40.

In figure 5C, the length of the arm section 22iii define the pendulum damper frequency of pendulum 40.

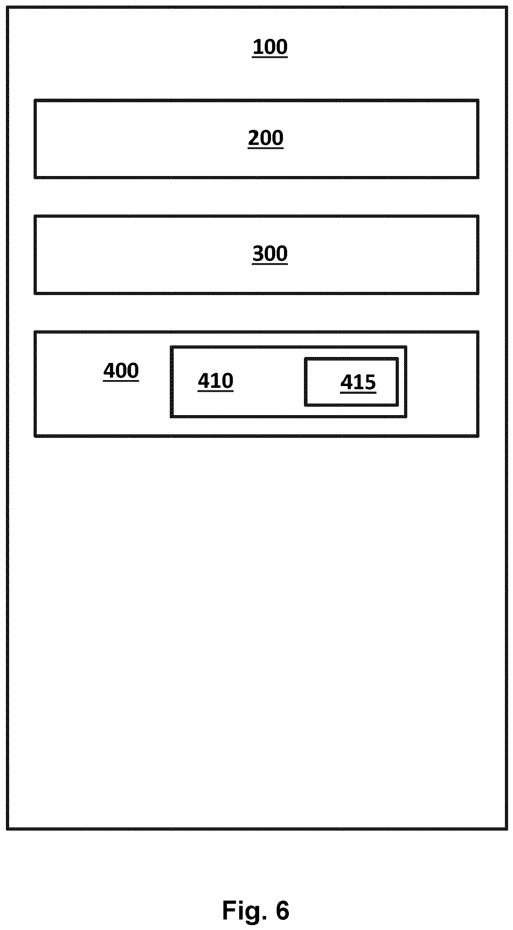

Fig. 6 illustrates a method 100 for damping a wind turbine tower 90 during transportation and/or installation of a wind turbine generator 90.

The wind turbine tower 90 comprises a pendulum damper 10. The pendulum damper 10 comprising one or three arms 20 extending from one or three top pivot joints 30 to a pendulum 40. Each arm 20 has two or more arm sections 22 divided by one or more arm pivot joints 50.

The method 100 comprises acts of
- transporting 200 the wind turbine tower 90; and/or
- installing 300 a wind turbine generator using the wind turbine tower 90; and
- adapting 400 pendulum damper frequency as a function of eigenfrequency of the wind turbine tower during the act of transportation 200 and/or the act of installation 300 of a wind turbine generator.

The act of adapting 400 is performed by an act of restricting 410 movement of one or more pivot joints 30, 50.

The act of restricting 410 is performed by displacing 415 a moveable fixation plate 60 between the top pivot joint 30 and the pendulum 40.

The act of adapting 400 is performed as a function of received instructions from a decision maker.

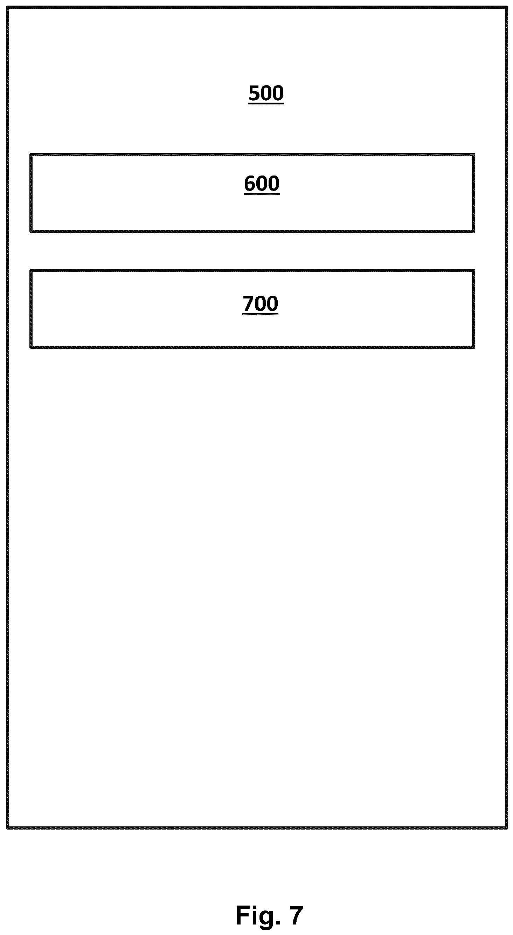

Fig. 7 illustrates method 500 for re-configuring the pendulum damper 90.

The method 500 for re-configuring the pendulum damper 10 comprises the acts of
- replacing 600 at least one of the two or more arm sections 22 with at least one arm section having a different length than the replaced arm section 22; and/or
- rearranging 700 the at least two of the two or more arm sections 22 in a different order from the one or three top pivot joints 30 to the pendulum 40.

## Claims

1. Method (100) for damping a wind turbine tower during transportation and/or during installation of a wind turbine generator, the wind turbine tower (90) comprising a pendulum damper (10), the pendulum damper (10) comprising one or three arms (20) extending from one or three top pivot joints (30) to a pendulum (40), each arm (20) having two or more arm sections (22) divided by one or more arm pivot joints (50), the method (100) comprising acts of
- transporting (200) the wind turbine tower (90); and/or
- installing (300) a wind turbine generator using the wind turbine tower (90); and
- adapting (400) pendulum damper frequency as a function of eigenfrequency of the wind turbine tower during the act of transporting (200) and/or the act of installing (300) of a wind turbine generator.

2. The method (100) according to claim 1, wherein the act of adapting (400) is performed by an act of restricting (410) movement of one or more pivot joints (30, 50).

3. The method (100) according to claim 2, wherein the act of restricting (410) is performed by displacing (415) a moveable fixation plate (60) between the top pivot joint (30) and the pendulum (40).

4. Method (100) according to one or more of claims 1-3, wherein the act of adapting (400) is performed as a function of received instructions from a decision maker.

5. Method (100) according to one or more of claims 1-4, wherein the wind turbine tower (90) is for an offshore wind turbine generator and the pendulum damper (10) comprises three arms sections (22) and two arm pivot joints (50),
- the pendulum damper (10) has a first damper frequency when the wind turbine tower is positioned at a dock;
- the pendulum damper (10) has a second damper frequency during transportation of the wind turbine tower on a vessel;
- the pendulum damper (10) has a third damper frequency when the wind turbine tower is installed on an offshore installation point, wherein
the first damper frequency, the second damper frequency, and the third damper frequency are different.

6. A wind turbine tower (90) comprising a pendulum damper (10), the pendulum damper (10) comprising one or three arms (20) extending from one or three top pivot joints (30) to a pendulum (40), each arm (20) having two or more arm sections (22) divided by one or more arm pivot joints (50) and having the means for performing the acts of the method according to any one of claims 1-5.

7. Pendulum damper (10) adapted for damping two or more frequencies of a tower such as a wind turbine tower (90), the pendulum damper (10) comprising
- a top plate (70) comprising one or three top pivot joints (30),
- a pendulum (40) being suspended by
- one or three arms (20) extending from the one or three top pivot joints (30) to the pendulum (40), each arm (20) having two or more arm sections (22) divided by one or more arm pivot joints (50);
- a moveable fixation plate (60) adapted for being displaced between the top plate (70) and the pendulum (40), wherein the one or three arms (20) extend through one or three apertures (62) of the moveable fixation plate (60).

8. Pendulum damper (10) according to claim 7, wherein the pendulum damper (10) further comprises one or more spindles (64) extending from the top plate (70) and at least one motor (72) configured for driving the one or more spindles (64), the one or more spindles (64) being coupled to the moveable fixation plate (60).

9. Pendulum damper (10) according to claim 8, wherein the pendulum damper (10) further comprises a battery adapted for powering the motor (72).

10. Pendulum damper (10) according to any one of claims 7-9, wherein the one or three arms (20) above the one or three arm pivot joints (50) comprise a wide element (32) complementary to the shape of the one or three apertures.

11. Pendulum damper (10) according to any one of claims 7-10, wherein the pendulum damper (10) comprises a frame arrangement (80) supporting the top plate (70) and surrounding at least the pendulum (40).

12. Pendulum damper (10) according to any one of claims 11, wherein the pendulum (40) comprises
- a side face adapted for collision with the frame arrangement (80); and
- a support face supporting a plurality of slideable, stacked plates extending beyond the side face.

13. Pendulum damper (10) according to any one of claims 11-12, wherein frame arrangement (80) extending from the top plate (70) to the pendulum (40), thereby forming a channel (82), wherein the moveable fixation plate (60) has a circumference complementary to the channel (82).

14. Use of the pendulum damper (10) according to any one of claims 6-13 during transportation of a wind turbine tower (90).

15. A method (500) for re-configuring the pendulum damper according to any one of claims 6-13, the method (500) comprising the acts of
- replacing (600) at least one of the two or more arm sections (22) with at least one arm section having a different length than the replaced arm section; and/or
- rearranging (700) the at least two of the two or more arm sections (22) in a different order from the one or three top pivot joints (30) to the pendulum (40).
